(19) Europäisches Patentamt / European Patent Office / Office européen des brevets

(11) **EP 2 527 235 B1**

(12) **EUROPÄISCHE PATENTSCHRIFT**

(45) Veröffentlichungstag und Bekanntmachung des Hinweises auf die Patenterteilung:
**26.02.2014   Patentblatt 2014/09**

(21) Anmeldenummer: **12002957.4**

(22) Anmeldetag: **27.04.2012**

(51) Int Cl.:
**B62D 55/00** *(2006.01)*        **B62D 55/075** *(2006.01)*
**B62D 55/08** *(2006.01)*

(54) **Raupenfahrwerkaufhängung**

Track assembly mounting

Suspension de chenille

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2011   AT 6252011**

(43) Veröffentlichungstag der Anmeldung:
**28.11.2012   Patentblatt 2012/48**

(73) Patentinhaber: **taurob OG**
**1230 Wien (AT)**

(72) Erfinder: **Silberbauer, Lukas-Sebastian Dipl.-Ing. Dr. techn.**
**2380 Perchtoldsdorf (AT)**

(56) Entgegenhaltungen:
**US-A- 4 253 536     US-A1- 2007 029 117**

**Beschreibung**

Die Erfindung betrifft eine Raupenfahrwerkaufhängung gemäß dem Oberbegriff des Patentanspruches 1.

Raupenfahrwerke sind seit dem Beginn des zwanzigsten Jahrhunderts bekannt. Hierbei ist eine Raupenkette, oft auch Gleiskette oder nur Kette genannt, an einer Raupenfahrwerkaufhängung so angeordnet, dass sich ein Fahrzeug durch die Bewegung der Raupenkette fortbewegt. Ein großer Vorteil eines Raupenfahrwerkes ist die ausgezeichnete Geländegängigkeit, da das Gewicht des derart angetriebenen Fahrzeuges auf eine große Fläche verteilt wird.

Solche Raupenfahrwerke sind in vielen Anwendungsbereichen verbreitet, beispielsweise im militärischen Bereich für Panzer oder im zivilen Bereich für Baufahrzeuge. Ein wichtiger Anwendungsbereich, welcher in letzter Zeit an Bedeutung zunimmt, ist die Verwendung von Raupenfahrwerken bei Robotern, bzw. sogenannten UGV (Unmanned Ground Vehicle), bei welchen die Anforderungen an die Geländegängigkeit nochmals stark erhöht sind, beispielsweise da solche Roboter in der Lage sein sollen, sich in unwegsamen und/oder Trümmer-übersäten Gelände ohne fremde Hilfe zu bewegen, oder sich in Gebäuden frei zu bewegen und Treppen zu erklimmen.

Gemäß einer Weiterbildung einer Raupenfahrwerkaufhängung kann die Geländegängigkeit dadurch erhöht werden, dass die Raupenfahrwerkaufhängung, neben einer ersten Aufhängung für eine erste Raupenkette am Chassis, eine zweite Aufhängung für eine zweite Raupenkette aufweist, wobei die zweite Raupenkette um das vorderste Rad der ersten Aufhängung und einem Umlenkrad, welches an einem drehbaren Arm angeordnet ist, gespannt ist. Der drehbare Arm ist dabei seitlich der ersten Aufhängung für die erste Raupenkette angeordnet, wobei die Drehachse des Armes und die Achse des vordersten Rades der ersten Aufhängung für die erste Raupenkette ident sind. Dadurch kann ein Fahrzeug mit einer derartigen Raupenfahrwerkaufhängung größere Hindernisse überqueren und beispielsweise Treppen erklimmen.

Aus der US2007/0029117 A1 ist ein Raupenfahrzeug bekannt, welches über ein variabel konfigurierbares Raupenfahrwerk verfügt.

Nachteilig daran ist, dass durch die Verwendung zusätzlicher Raupenketten die Spurbreite eines Fahrzeuges vergrößert wird, wodurch eine Fortbewegung in beengenden Verhältnissen erschwert wird. Weiters wird dadurch der Aufbau solch einer Raupenfahrwerkaufhängung wesentlich komplexer, wodurch der Herstellungsaufwand größer wird. Ebenfalls wird das Gewicht der Raupenfahrwerkaufhängung durch die zusätzlichen Komponenten vergrößert, was sich im Einsatz negativ auswirkt, beispielsweise durch einen erhöhten Energieverbrauch. Durch die Verwendung von zusätzlichen Komponenten steigt statistisch auch das Risiko, dass eine Komponente ausfällt, wodurch im schlimmsten Fall das ganze Fahrzeug nicht mehr einsatzbereit ist.

Aufgabe der Erfindung ist es daher eine Raupenfahrwerkaufhängung der eingangs genannten Art anzugeben, mit welcher die genannten Nachteile vermieden werden können, welche an unterschiedliche Untergrundbeschaffenheiten angepasst werden kann und einfach aufgebaut ist.

Erfindungsgemäß wird dies durch die Merkmale des Patentanspruches 1 erreicht.

Dadurch ergibt sich der Vorteil, dass solch eine Raupenfahrwerkaufhängung eine gute Geländegängigkeit aufweist, da die Form der Raupenfahrwerkaufhängung an die unterschiedlichen Untergrundbeschaffenheiten, bzw. zu überwindende Hindernisse angepasst werden kann. Weiters weist eine solche Raupenfahrwerkaufhängung eine geringe Spurweite auf, wodurch ein Fahrzeug mit einer solchen Raupenfahrwerkaufhängung gut in einer beengenden Umgebung eingesetzt werden kann. Durch den einfachen Aufbau mit wenigen Komponenten kann ein Fahrzeug preisgünstig hergestellt werden, wodurch beispielsweise Roboter mit solch einer Raupenfahrwerkaufhängung auch für weniger finanzstarke Einsatzorganisationen interessant werden. Weiters wird durch den einfachen und preisgünstigen Aufbau der Verlust eines, insbesondere unbemannten, Fahrzeuges mit einer solchen Raupenfahrwerkaufhängung besser verkraftbar, wodurch bei einem Einsatz solch eines Fahrzeuges in einem kontaminierten Gebiet, das Fahrzeug nach Erfüllung der Aufgabe in dem kontaminierten Gebiet verbleiben kann, wodurch auf eine aufwendige Dekontaminierung verzichtet werden kann. Durch den Aufbau mit wenigen und einfachen Komponenten wird weiters die Masse, bzw. das Gewicht der Raupenfahrwerkaufhängung und damit verbunden des gesamten Fahrzeuges verringert, wodurch beispielsweise der Energieverbrauch im Einsatz verringert wird, bei einem unbemannten Fahrzeug das Fahrzeug leicht von dem Bedienungspersonal in einen schwerzugänglichen Einsatzraum gebracht werden kann, und/oder das Fahrzeug gut in instabilen Verhältnissen, beispielsweise in einem einsturzgefährdeten Gebäude, eingesetzt werden kann. Durch den Einsatz von wenigen, bzw. einfachen Komponenten verringert sich auch die Wahrscheinlichkeit eines technischen Gebrechens, was besonders vorteilhaft ist bei einem Einsatz in einem Katastrophengebiet oder auf einem fremden Himmelskörper.

Die Erfindung betrifft weiters ein Verfahren zum Wechseln einer Raupenkette bei einer Raupenfahrwerkaufhängung gemäß dem Oberbegriff des Patentanspruches 14.

Aufgabe dieses Verfahrens ist es, die Raupenkette bei einer, insbesondere erfindungsgemäßen, Raupenfahrwerkaufhängung besonders schnell und mit wenigen Schritten zu wechseln.

Erfindungsgemäß wird dies durch die Merkmale des Patentanspruches 14 erreicht.

Dadurch ergibt sich der Vorteil, dass die Raupenkette schnell gewechselt werden kann, insbesondere da ein eigener Schritt zum Spannen der Kette entfällt, und das betroffene Fahrzeug schnell wieder einsatzfähig ist. Weiters kann dadurch einfach und schnell die für den Einsatzzweck geeignetste Raupenkette an der Raupenfahrwerkaufhängung angeordnet werden. Weiters sind dadurch nur wenige Manipulationen an der Raupenfahrwerkaufhängung notwendig um die Kette zu wechseln, wodurch die Gefahr einer Kontamination des Bedienungspersonals durch vom Einsatz kontaminierte Raupenketten gering gehalten werden kann.

Die Erfindung betrifft weiters ein Verfahren zum Verschwenken eines Schwenkelementes um eine Schwenkachse bei einer Raupenfahrwerkaufhängung gemäß dem Oberbegriff des Patentanspruches 15

Aufgabe dieses Verfahrens ist es, das Verschwenken eines Schwenkelementes um eine Schwenkachse bei einer besonders einfach aufgebauten Raupenfahrwerkaufhängung zu ermöglichen.

Erfindungsgemäß wird dies durch die Merkmale des Patentanspruches 15 erreicht.

Dadurch ergibt sich der Vorteil, dass das Verschwenken des Schwenkelementes ohne einen eigenen Motor zum Verschwenken des Schwenkelementes möglich ist. Dadurch kann eine besonders einfach aufgebaute Raupenfahrwerkaufhängung verwendet werden.

Die Unteransprüche betreffen weitere vorteilhafte Ausgestaltungen der Erfindung.

Ausdrücklich wird hiermit auf den Wortlaut der Ansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:

Fig. 1 eine erste bevorzugte Ausführungsform in einem ersten Zustand als Prinzipdarstellung;

Fig. 2 die erste bevorzugte Ausführungsform in einem zweiten Zustand als Prinzipdarstellung;

Fig. 3 eine zweite bevorzugte Ausführungsform in einem ersten Zustand als Prinzipdarstellung;

Fig. 4 die zweite bevorzugte Ausführungsform in einem zweiten Zustand als Prinzipdarstellung;

Fig. 5 die geometrischen Größen der zweiten bevorzugte Ausführungsform als Skizze;

Fig. 6 den Zusammenhang zwischen einem Schwenkwinkel und der Länge einer umschließenden Kurve einer ersten Konfiguration als Diagramm;

Fig. 7 ein Detail aus Fig. 6;

Fig. 8 den Zusammenhang zwischen dem Schwenkwinkel und der Länge der umschließenden Kurve einer zweiten Konfiguration als Diagramm;

Fig. 9 den Zusammenhang zwischen dem Schwenkwinkel und der Länge der umschließenden Kurve einer dritten Konfiguration als Diagramm;

Fig. 10 den Zusammenhang zwischen dem Schwenkwinkel und der Länge der umschließenden Kurve einer vierten Konfiguration als Diagramm;

Fig. 11 den Zusammenhang zwischen dem Schwenkwinkel und der Länge der umschließenden Kurve einer fünften Konfiguration als Diagramm;

Fig. 12 den Zusammenhang zwischen dem Schwenkwinkel und der Länge der umschließenden Kurve einer sechsten Konfiguration als Diagramm; und

Fig. 13 den Zusammenhang zwischen dem Schwenkwinkel und der Länge der umschließenden Kurve einer siebenten Konfiguration als Diagramm.

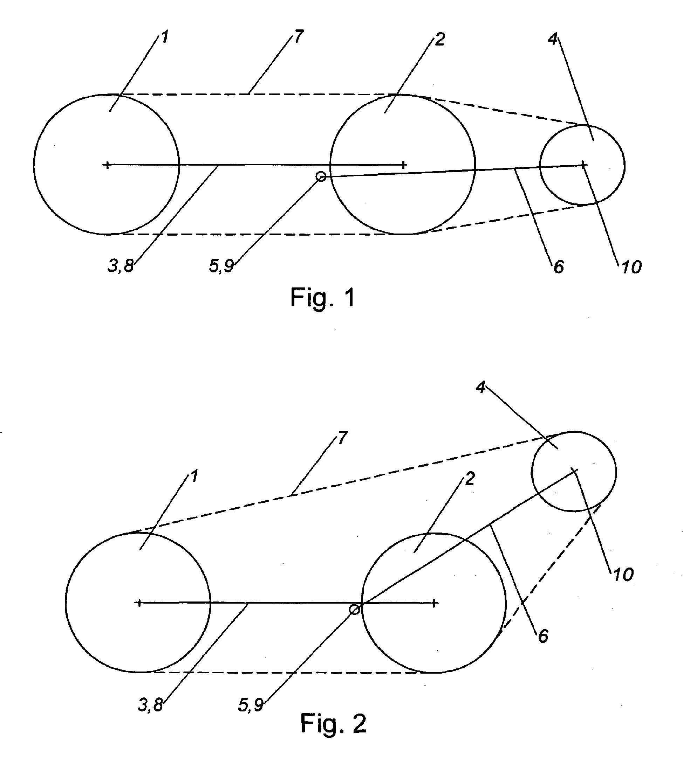

Die Fig. 1 bis 5 zeigen besondere Ausführungsformen einer Raupenfahrwerkaufhängung, mit einem ersten Umlenkrad 1 und wenigstens einem Laufrad 2, wobei eine Achse des ersten Umlenkrades 1 und eine Achse des wenigstens einen Laufrades 2 in einer Aufhängungsvorrichtung 3 gelagert sind, und einem zweiten Umlenkrad 4, wobei eine Achse des zweiten Umlenkrades 4 in einem gegenüber der Aufhängungsvorrichtung 3 um eine Schwenkachse 5 verschwenkbar angeordneten Schwenkelement 6 gelagert ist, wobei die Achse des ersten Umlenkrades 1, die Achse des zweiten Umlenkrades 4 und die Achse des wenigstens einen Laufrades 2 in einer Ebenenposition im Wesentlichen in einer Ebene angeordnet sind, wobei in der Ebenenposition das wenigstens eine Laufrad 2 zwischen dem ersten Umlenkrad 1 und dem zweiten Umlenkrad 4 angeordnet ist, wobei der Abstand zwischen der Achse des ersten Umlenkrades 1 und der Achse des wenigstens einen Laufrades 2 sowohl größer ist als der Abstand zwischen der Schwenkachse 5 und der Achse des ersten Umlenkrades 1, als auch der Abstand zwischen der Schwenkachse 5 und der Achse des wenigstens einen Laufrades 2, und wobei die Schwenkachse derart angeordnet ist, dass ein Arbeits-Schwenkbereich des Schwenkelementes 6 einen vorgebbaren Sollbereich entweder erfüllt oder diesem zumindest angenähert ist, wobei die Länge der das erste Umlenkrad 1, das zweite Umlenkrad 4 und das wenigstens eine Laufrad 2 umschließenden Kurve 7 bei einer Verschwenkung des Schwenkelementes 6 innerhalb des Arbeits-Schwenkbereiches in einem vorgegebenen Raupendilatationstoleranzbereich ist. Raupenfahrwerkaufhängungen dienen zur Aufhängung und/oder Führung von Raupenketten und der Fortbewegung eines Fahrzeuges durch solche Raupenketten. Solche Raupenketten, oft auch als Gleiskette bezeichnet, können auf unterschiedliche Art aufgebaut sein, beispielsweise aus mehreren starren diskreten Elementen als Verbinderkette oder als Scharnierkette, oder als einteilige Raupenkette bestehend aus Kunststoff oder Verbundwerkstoffen.

Die vorgesehene Raupenkette kann beispielsweise auch auf verschiedene Einsatzzwecke oder Untergrundbeschaffenheiten optimiert sein. Beispielsweise kann die Raupenkette für einen felsigen oder sandigen Untergrund, oder für das innere eines Gebäudes, wo Treppen ein großes Hindernis darstellen, optimiert sein. Die Raupenkette kann aber auch an diverse Umwelteinflüsse angepasst werden, beispielsweise indem die Raupenkette aus einem Material gefertigt ist, welches unabhängig gegenüber aggressiven Chemikalien, beispielsweise Säuren, oder hohen Temperaturen, beispielsweise in einem brennenden Gebäude, ist.

Die Raupenfahrwerkaufhängung weist das erste Umlenkrad 1 und das wenigstens eine Laufrad 2 auf, wobei die Achse des ersten Umlenkrades 1 und die Achse des wenigstens einen Laufrades 2 in der Aufhängungsvorrichtung 3 gelagert sind.

Die Aufhängungsvorrichtung 3 kann dabei bevorzugt der Rahmen des Fahrzeuges sein, wobei das erste Umlenkrad 1 und das wenigstens eine Laufrad 2 dann direkt am Rahmen gelagert sind. Alternativ kann die Aufhängungsvorrichtung 3 aber auch eine Komponente sein, welche an einem Fahrzeug abnehmbar angeordnet ist. In Fig. 1 bis Fig. 5 ist die Aufhängungsvorrichtung 3 nur symbolisch als Linie zwischen der Achse des ersten Umlenkrades 1 und der Achse des wenigstens einen Laufrades 2 dargestellt.

Die Raupenfahrwerkaufhängungen hat weiters das zweite Umlenkrad 4, wobei die Achse des zweiten Umlenkrades 4 in dem gegenüber der Aufhängungsvorrichtung 3 um die Schwenkachse 5 verschwenkbar angeordneten Schwenkelement 6 gelagert ist.

Gemäß den bevorzugten Ausführungsformen kann vorgesehen sein, dass die Schwenkachse 5 zu der Achse des zweiten Umlenkrades 4 in einem festen Abstand angeordnet ist. Dadurch kann auf komplexe Stelltriebe, bzw. weiteren Vorrichtungen zur Variation des Abstandes der Schwenkachse 5 zu der Achse des zweiten Umlenkrades 4 verzichtet werden.

Weiters kann gemäß den bevorzugten Ausführungsformen vorgesehen sein, dass die Schwenkachse 5 zu der Achse des ersten Umlenkrades 1 in einem festen Abstand angeordnet ist, und dass die Schwenkachse 5 zu der Achse des wenigstens einen Laufrades 2 in einem festen Abstand angeordnet ist. Dadurch kann auf zusätzliche Komponenten zur Variation der Position der Schwenkachse 5 verzichtet werden.

Besonders bevorzugt kann vorgesehen sein, dass die Schwenkachse 5 im Wesentlichen parallel zu der Achse des ersten Umlenkrades 1 und der Achse des wenigstens einen Laufrades 2 ist.

Bevorzugt kann vorgesehen sein, dass das erste Umlenkrad 1, und/oder das zweite Umlenkrad 4 und/oder das wenigstens eine Laufrad 2 einen Zahnkranz aufweisen, welcher dazu vorgesehen ist in eine Raupenkette einzugreifen.

Weiters kann bevorzugt vorgesehen sein, dass das erste Umlenkrad 1, und/oder das zweite Umlenkrad 4 und/oder das wenigstens eine Laufrad 2 weitere Mittel zur Führung der Raupenkette aufweisen. Solche Mittel können beispielsweise Führungskränze an dem ersten Umlenkrad 1, und/oder dem zweiten Umlenkrad 4 und/oder dem wenigstens einem Laufrad 2 sein, oder Rillen in welche an einer Raupenkette angeordnete Führungszähne geführt werden können.

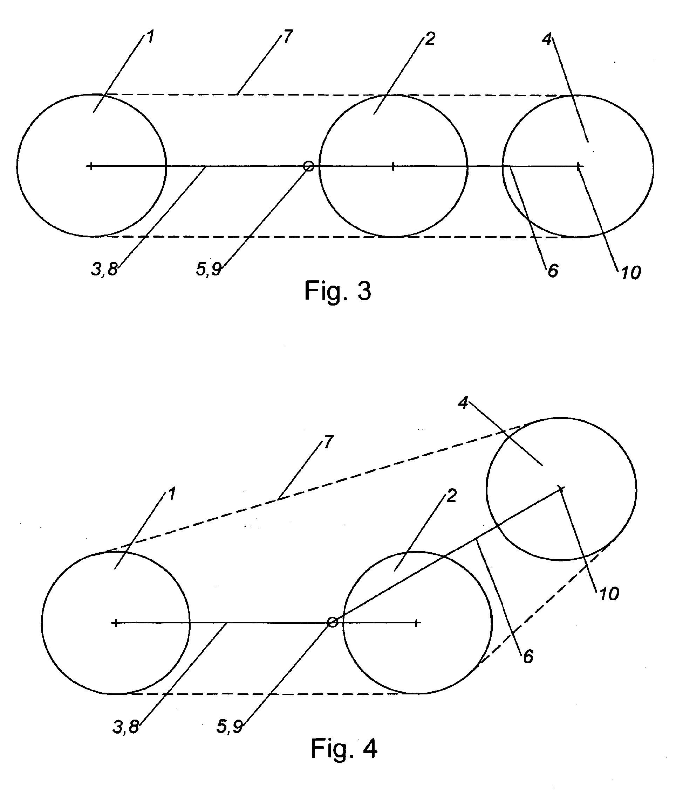

Die Achse des ersten Umlenkrades 1, die Achse des zweiten Umlenkrades 4 und die Achse des wenigstens einen Laufrades 2 sind in der Ebenenposition im Wesentlichen in einer Ebene angeordnet sind, wobei in der Ebenenposition das wenigstens eine Laufrad 2 zwischen dem ersten Umlenkrad 1 und dem zweiten Umlenkrad 4 angeordnet ist. In Fig. 1 und Fig. 3 befinden sich bevorzugte Ausführungsformen in dieser Ebenenposition. Da die Blickrichtung in diesen Darstellungen genau entlang dieser Ebene verläuft erscheint diese Ebene als Linie. Die Ebenenposition stellt dabei keinen besonders bevorzugte oder ausgezeichneten Zustand, bzw. Stellung des ersten Umlenkrades 1, des wenigstens einen Laufrades 2 und des zweiten Umlenkrades 4 dar, sondern dient lediglich zur klaren Darstellung der Lage der Achsen des ersten Umlenkrades 1, des wenigstens einen Laufrades 2 und des zweiten Umlenkrades 4 zueinander. In Fig. 2, Fig. 4 und Fig. 5 werden bevorzugte Ausführungsformen in einem von der Ebenenposition unterschiedlichen zweiten Zustand dargestellt.

Die Verschwenkung des Schwenkelementes 6 gegenüber der Aufhängungsvorrichtung 3 um die Schwenkachse 5 kann bevorzugt mit einem Schwenkwinkel $\alpha$ angegeben werden, wobei bevorzugt dieser Schwenkwinkel $\alpha$ in der Ebenenposition denn Wert null aufweist.

Gemäß den bevorzugten Ausführungsformen kann vorgesehen sein, dass die Achse des ersten Umlenkrades 1, die Achse des wenigstens einen Laufrades 2 und die Achse des zweiten Umlenkrades 4 im Wesentlichen parallel zueinander sind.

Weiters kann besonders bevorzugt vorgesehen sein, dass das erste Umlenkrad 1, das zweite Umlenkrad 4 und das wenigstens eine Laufrad 2 im Wesentlichen in einer zweiten Ebene, der sogenannten Radebene, angeordnet sind, wobei die Radebene dementsprechend im Wesentlichen normal zu der Achse des ersten Umlenkrades 1, der Achse des wenigstens einen Laufrades 2 und der Achse des zweiten Umlenkrades 4 steht. Dadurch kann ein Abwurf der Raupenkette verhindert werden, und weiters wird der Verschleiß der Raupenkette dadurch gering gehalten.

Gemäß den bevorzugten Ausführungsformen kann weiters vorgesehen sein, dass die Schwenkachse 5 parallel zu den Achsen des ersten Umlenkrades 1, des zweiten Umlenkrades 4 und des wenigstens einen Laufrades ist.

Weiters kann bevorzugt vorgesehen sein, dass die Radebene zwischen der Aufhängungsvorrichtung 3 und dem Schwenkelement 6 angeordnet ist. Dadurch wird die Verschwenkbarkeit des Schwenkelements 6 nicht durch die Aufhängungsvorrichtung 3 behindert oder eingeschränkt.

Der Abstand zwischen der Achse des ersten Umlenkrades 1 und der Achse des wenigstens einen Laufrades 2 ist sowohl größer als der Abstand zwischen der Schwenkachse 5 und der Achse des ersten Umlenkrades 1, als auch der Abstand zwischen der Schwenkachse 5 und der Achse des wenigstens einen Laufrades 2. Bevorzugt kann dabei vorgesehen sein, dass diese Abstände in der Radebene gemessen werden.

Alternativ kann diese Position der Schwenkachse 5 auch dadurch beschrieben werden, dass die Schwenkachse 5 im Bereich zwischen dem ersten Umlenkrad 1 und dem wenigstens einen Laufrad 2 angeordnet ist.

Alternativ kann die Position der Schwenkachse weiters dadurch beschrieben werden, dass die Schwenkachse 5 in einer Normalebene zu einer Verbindungsstrecke 8 zwischen der Achse des ersten Umlenkrades 1 und der Achse des wenigstens einen Laufrades 2, wobei die Normalebene zwischen der Achse des ersten Umlenkrades 1 und der Achse des wenigstens einen Laufrades 2 liegt, ist.

Die Schwenkachse ist weiters derart angeordnet ist, dass ein Arbeits-Schwenkbereich des Schwenkelementes 6 einen vorgebbaren Sollbereich entweder erfüllt oder diesem zumindest angenähert ist, wobei die Länge der das erste Umlenkrad 1, das zweite Umlenkrad 4 und das wenigstens eine Laufrad 2 umschließenden Kurve 7 bei einer Verschwenkung des Schwenkelementes 6 innerhalb des Arbeits-Schwenkbereiches in einem vorgegebenen Raupendilatationstoleranzbereich ist.

Die das erste Umlenkrad 1, das zweite Umlenkrad 4 und das wenigstens eine Laufrad 2 umschließenden Kurve 7, welche folgend lediglich als umschließende Kurve bezeichnet wird, ist die kürzeste das erste Umlenkrad 1, das zweite Umlenkrad 4 und das wenigstens eine Laufrad 2 umschließende Kurve 7, welche insbesondere in der Radebene liegt. Die umschließende Kurve wird in Fig. 1 bis Fig. 4 lediglich als gestrichelte Linie dargestellt.

Eine an der Raupenfahrwerkaufhängung angeordnete Raupenkette verläuft im Wesentlichen entlang der umschließenden Kurve 7, wenn die Raupenkette gespannt ist.

Vorteilhaft daran ist, dass die Raupenkette dadurch bei einer Verschwenkung des Schwenkelement 6 innerhalb des Arbeits-Schwenkbereiches im Wesentlichen gespannt ist, da die Schwenkachse 5 derart angeordnet ist, dass die Längenänderung der Raupenkette kleiner als der Raupendilatationstoleranzbereich ist. Dadurch kann die Raupenfahrwerkaufhängung einfach an die unterschiedlichen Untergrundbeschaffenheiten, bzw. zu überwindende Hindernisse angepasst werden. Da nur eine Raupenkette pro Raupenfahrwerkaufhängung vorgesehen ist kann in vorteilhafter Weise die Spurweite gering gehalten werden. Durch den einfachen Aufbau mit wenigen Komponenten kann der Herstellungsaufwand, und damit der Preis, gering gehalten werden, wodurch eine weite Verbreitung von Fahrzeugen mit einer solchen Raupenfahrwerkaufhängung ermöglicht wird. Weiters kann dadurch auch das Gewicht und die Wahrscheinlichkeit, dass eine Komponente ausfällt, in vorteilhafter Weise gering gehalten werden.

Wenn beispielsweise die Schwenkachse 5 mit der Achse des wenigstens einen Laufrades 2 zusammenfällt, führt eine Verschwenkung des Schwenkelementes 6 aus der Ebenenposition zu einer stetigen Verkürzung der umschließenden Kurve 7. Eine an der Raupenfahrwerkaufhängung aufgehängte Raupenkette wird in diesem Fall nur noch locker an der Raupenfahrwerkaufhängung hängen wodurch die Gefahr eines Abwurfes der Raupenkette sehr groß ist.

Bei einer Anordnung der Schwenkachse 5 an bestimmten Positionen im obengenannten Bereich kann sich die Länge der umschließenden Kurve 7 in einem großen Schwenkbereich, daher einem zusammenhängenden Bereich von Schwenkwinkeln $\alpha$, innerhalb des Raupendilatationstoleranzbereich befinden, beispielsweise wenn bei einer Verschwenkung des Schwenkelementes 6 aus der Ebenenposition die Länge der umschließenden Kurve 7 zunächst zunimmt bevor es bei einer weiteren Zunahme des Schwenkwinkels $\alpha$ zu einer stetigen Verkürzung der umschließenden Kurve 7 kommt.

Der Raupendilatationstoleranzbereich ist dabei jener Wertebereich der Länge der umschließenden Kurve 7, bei welchen eine an der Raupenfahrwerkaufhängung aufgehängte Raupenkette für den Betrieb weder zu locker sitzt noch ungebührend gespannt wird.

Besonders bevorzugt kann vorgesehen sein, dass der vorgebbare Raupendilatationstoleranzbereich unter Berücksichtigung der Eigenschaften einer vorgesehenen Raupenkette, und/oder den Eigenschaften des ersten Umlenkrades 1, und/oder den Eigenschaften des wenigstens einen Laufrades 2 und/oder den Eigenschaften des zweiten Umlenkrades 4 vorgegeben ist.

Die Eigenschaften der vorgesehenen Raupenkette, welche den vorgebbaren Raupendilatationstoleranzbereich beeinflussen, können beispielsweise bei einer einstückigen Raupenkette aus Kunststoff oder einem Verbundwerkstoff die Elastizität der Raupenkette sein. Bei einer Raupenkette aus mehreren starren diskreten Gliedern kann beispielsweise das Spiel zwischen den Gliedern den Raupendilatationstoleranzbereich beeinflussen. Auch etwaige an einer Raupenkette angeordnete Führungszähne können den Raupendilatationstoleranzbereich beeinflussen, da durch die Größe solcher Führungszähne die Gefahr eines Abwurfes der Raupenkette beeinflusst werden kann.

Die Eigenschaften des ersten Umlenkrades 1, und/oder des wenigstens einen Laufrades 2 und/oder des zweiten Umlenkrades 4, welche den Raupendilatationstoleranzbereich beeinflussen, können beispielsweise die Größe, bzw. Form von etwaigen Zahnkränzen oder Mitteln zur Führung der Raupenkette sein.

Der Raupendilatationstoleranzbereich kann beispielsweise eine absolute Längenänderung der umschließenden Kurve 7 angeben, beispielsweise wenn der Raupendilatationstoleranzbereich hauptsächlich durch die Dimensionierung der Mittel zur Führung der Raupenkette vorgegeben ist, oder eine prozentuale Längenänderung der umschließenden Kurve 7 angeben, beispielsweise wenn der Raupendilatationstoleranzbereich hauptsächlich durch die Elastizität der vorgesehenen Raupenkette vorgegeben ist.

Bevorzugt kann vorgesehen sein, dass der Raupendilatationstoleranzbereich 1%, insbesondere 0,1%, oder besonders bevorzugt 0,01% der Länge der umschließenden Kurve 7 beträgt. Durch solch geringe Werte kann das Risiko eines Abwurfes der vorgesehenen Raupenkette, und/oder die Beeinträchtigung des Fahrverhaltens durch eine zu elastische Raupenkette, bzw. zu großem Spiel in der Raupenkette gering gehalten werden.

Der Schwenkbereich des Schwenkelementes 6, bei welchem die Länge der umschließenden Kurve 7 im Raupendilatationstoleranzbereich verbleibt, wird als Arbeits-Schwenkbereich bezeichnet, da in diesem Arbeits-Schwenkbereich ein gutes Funktionieren der Raupenfahrwerkaufhängung im Einsatz gewährleistet ist.

Der Sollbereich ist ein Schwenkbereich des Schwenkelementes 6, welcher vom Fachmann vorgegeben wird. Der Sollbereich kann beispielsweise ein Schwenkbereich des Schwenkelementes 6 sein, bei welchen davon ausgegangen werden kann, dass im Einsatz zu erwartende Hindernisse von der Raupenfahrwerkaufhängung überwindbar sind.

Die Größe des Arbeits-Schwenkbereichs und die Größe des Raupendilatationstoleranzbereichs beeinflussen einander. Beispielsweise führt ein großer Raupendilatationstoleranzbereich zu einem großen Arbeits-Schwenkbereich. Hierbei kann der Fachmann beispielsweise bei der Konstruktion einer Raupenfahrwerkaufhängung von einem vorgegebenen Raupendilatationstoleranzbereich, beispielsweise durch eine besondere vorgesehene Raupenkette mit einer bekannten Elastizität, ausgehen und die Schwenkachse 5 derart anordnen, dass der Arbeits-Schwenkbereich den vorgebbaren Sollbereich erfüllt.

Unter bestimmten Voraussetzungen, beispielsweise wenn der vorgebbare Sollbereich zu hoch angesetzt ist, oder nur ein kleiner Raupendilatationstoleranzbereich vorgegeben ist, kann es sein, dass bei keiner Position der Schwenkachse 5 der Arbeits-Schwenkbereich den vorgebbaren Sollbereich erfüllt. In diesem Fall wird die Schwenkachse 5 derart angeordnet, dass der Arbeits-Schwenkbereich dem vorgebbaren Sollbereich zumindest angenähert ist, daher dass der Unterschied zwischen Sollbereich und Arbeits-Schwenkbereich minimal ist, oder dieser Unterschied so klein ist wie praktisch erreichbar. Eine solche Annäherung des Arbeits-Schwenkbereiches an den Sollbereich kann beispielsweise mittels bekannter Optimierungsmethoden erfolgen.

Bevorzugt kann vorgesehen sein, dass der vorgebbare Sollbereich ein Schwenkbereich von 20°, bevorzugt 30°, insbesondere 40°, in beide Richtungen ausgehend von der Ebenenposition ist. Dadurch kann eine gute Geländegängigkeit erreicht werden, beispielsweise indem höhere Hindernisse überwunden werden können. Bei einem Arbeits-Schwenkbereich, welcher einen Sollbereich von 20° erfüllt, wird die maximale Höhe eines überwindbaren Hindernisses bereits um 34% des Abstandes der Schwenkachse 5 zu der Achse des zweiten Umlenkrades 4 vergrößert. Ein Arbeits-Schwenkbereich, welcher einen Sollbereich von 40° erfüllt, eignet sich besonders gut zum Erklimmen von Treppen. Wenn der Arbeits-Schwenkbereich einen Sollbereich erfüllt, welcher sich beide Richtungen des Schwenkwinkels $\alpha$ ausgehend von der Ebenenposition erstreckt, können nicht nur höhere Hindernisse überwunden werden, sondern auch eine gute Haftung durch eine große Auflagefläche bei einer Überquerung eines konvexen Hindernisses erreicht werden. Wenn der Arbeits-Schwenkbereich einen Sollbereich erfüllt, welcher symmetrisch um die Ebenenposition ist, daher in beide Richtungen des Schwenkwinkels $\alpha$ gleich groß ist, kann ein Fahrzeug mit einer derartigen Raupenfahrwerkaufhängung selbst nach einem Umkippen die gleiche Geländegängigkeit aufweisen.

Fig. 1 und Fig. 2 zeigen die erste bevorzugte Ausführungsform, welche ein erstes Umlenkrad 1 und lediglich ein Laufrad 2 umfasst, wobei die Durchmesser des ersten Umlenkrades 1 und des Laufrades 2 ident sind. Der Durchmesser des zweiten Laufrades 4 ist kleiner als der Durchmesser des ersten Laufrades 1. Die Schwenkachse 5, die Achse des ersten Umlenkrades 1, die Achse des zweiten Umlenkrades 4 und die Achse des Laufrades 2 sind gemäß

EP 2 527 235 B1

der bevorzugten Ausführungsform parallel. Die Schwenkachse 5 ist neben der Verbindungsstrecke 8 angeordnet. Durch diese Anordnung der Schwenkachse 5 abseits der Verbindungsstrecke ist der Arbeits-Schwenkbereich nicht mehr symmetrisch um die Ebenenposition, wodurch sich beispielsweise der Arbeits-Schwenkbereich in eine Richtung auf Kosten des Arbeits-Schwenkbereichs in die andere Richtung vergrößert, was vorteilhaft sein kann, wenn das Fahrzeug mit der Raupenfahrwerkaufhängung gemäß der ersten bevorzugten Ausführungsform eine vorgegebene Ober- und Unterseite aufweist. Der kleinere Durchmesser des zweiten Umlenkrades 4 bietet den Vorteil, dass die Höhe der Raupenfahrwerkaufhängung bei aus der Ebenenposition verschwenktem Schwenkelement 6 gering gehalten werden kann.

Gemäß den bevorzugten Ausführungsformen kann besonders bevorzugt vorgesehen sein, dass, vorzugsweise lediglich, das erste Umlenkrad 1 angetrieben ist. Das erste Umlenkrad 1 wird in einem großen Bereich von der an der Raupenfahrwerkaufhängung aufhängbaren Raupenkette umschlossen, weshalb das erste Umlenkrad 1 als Antriebsrad besonders geeignet ist. Wenn lediglich das erste Umlenkrad 1 angetrieben ist ergibt sich weiters der Vorteil, dass auf weitere Antriebe, bzw. aufwendige Wellen oder Kupplungen verzichtet werden kann, wodurch der Aufbau der Raupenfahrwerkaufhängung besonders einfach gehalten werden kann.

Gemäß der zweiten bevorzugten Ausführungsform in Fig. 3 und Fig. 4 kann bevorzugt vorgesehen sein, dass die Schwenkachse 5 auf einer Verbindungsstrecke 8 zwischen der Achse des wenigstens einen Laufrades 2 und der Achse des ersten Umlenkrades 1 angeordnet ist. Dadurch ist der Arbeits-Schwenkbereich symmetrisch um die Ebenenposition verteilt, wodurch die Raupenfahrwerkaufhängung keine bevorzugte Ober- oder Unterseite hat. Dadurch ist ein entsprechend konstruiertes Fahrzeug mit einer solchen Raupenfahrwerkaufhängung durch ein Umkippen in seiner Einsatzfähigkeit nicht behindert, wodurch es in sehr unebenem Gelände gut einsetzbar ist.

Gemäß der zweiten bevorzugten Ausführungsform kann weiters bevorzugt vorgesehen sein, dass die Durchmesser des ersten Umlenkrades 1, des zweiten Umlenkrades 4 und des wenigstens einen Laufrades 2 im Wesentlichen gleich sind. Dadurch kann die Raupenfahrwerkaufhängung einfach aufgebaut sein, da überall die gleichen Räder verwendet werden können. Weiters kann dadurch auch die Zahl der nötigen Ersatzteile gering gehalten werden, da für das erste Umlenkrad 1, das zweite Umlenkrad 4 und das wenigstens eine Laufrad 2 das gleiche Ersatzteil verwendet werden kann. Weiters hat sich gezeigt, dass durch die Verwendung gleicher Durchmesser ein besonders kleiner Raupendilatationstoleranzbereich in einem großen Arbeits-Schwenkbereich erzielt werden kann.

Gemäß der zweiten bevorzugten Ausführungsform kann vorgesehen sein, dass die Schwenkachse 5 im Bereich zwischen der Achse des wenigstens einen Laufrades 2 und der Mitte der Verbindungsstrecke 8 zwischen der Achse des wenigstens einen Laufrades 2 und der Achse des ersten Umlenkrades 1 angeordnet ist, da es sich gezeigt hat, dass eine Anordnung der Schwenkachse in der Mitte der Verbindungsstrecke 8, bzw. im Bereich zwischen der Achse des ersten Umlenkrades 1 Laufrades 2 und der Mitte der Verbindungsstrecke 8 bei den Merkmalen der zweiten bevorzugten Ausführungsform zu einer stetigen Verlängerung der Länge der umschließenden Kurve 7 bei einer Verschwenkung aus der Ebenenposition führt.

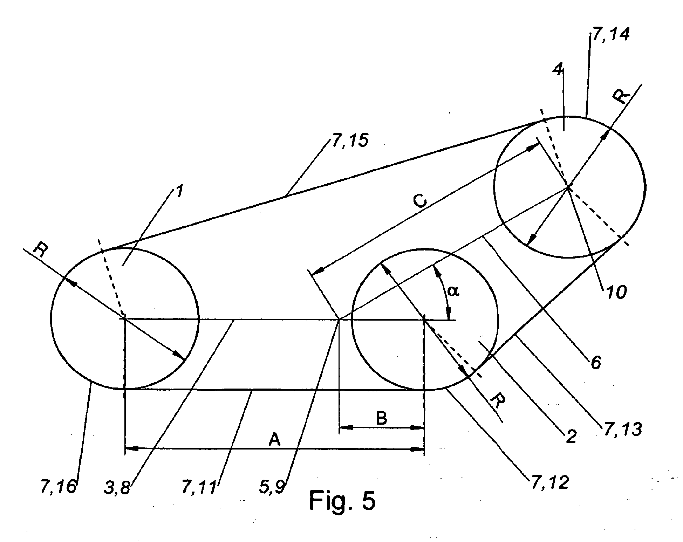

Wie die Position für die Schwenkachse 5 bei der zweiten bevorzugten Ausführungsform ermittelt werden kann, bei welcher der Arbeits-Schwenkbereich den vorgebbaren Sollbereich erfüllt, oder zumindest diesem angenähert ist, wird ausführlich anhand von Fig. 5, welche eine Skizze der zweiten bevorzugten Ausführungsform mit allen relevanten Größen enthält, beschrieben.

Um die Länge d der umschließenden Kurve 7, welche nachfolgen nur als die Länge d bezeichnet wird, zu berechnen wird die umschließende Kurve 7 in sechs Teilstücke zerteilt, wobei die Enden der jeweiligen Teilstücke in Fig. 5 durch gestrichene Linien angedeutet wird. Das erste Teilstück 11 verläuft von dem ersten Umlenkrad 1 zu dem Laufrad 2. Das zweite Teilstück 12 ist jenes Teilstück der umschließenden Kurve 7 welche entlang dem Laufrad 2 verläuft. Das dritte Teilstück 13 verläuft von dem Laufrad 2 zu dem zweiten Umlenkrad 4. Das vierte Teilstück 14 ist jenes Teilstück der umschließenden Kurve 7 welche entlang dem zweiten Umlenkrad 4 verläuft. Das fünfte Teilstück 15 verläuft von dem zweiten Umlenkrad 4 zu dem ersten Umlenkrad 1. Das sechste Teilstück 16 ist jenes Teilstück der umschließenden Kurve 7 welche entlang dem ersten Umlenkrad 1 verläuft.

Zur Berechnung der Länge der einzelnen Teilstücke werden als geometrische Größen der Abstand A zwischen der Achse des ersten Umlenkrades 1 und der Achse des Laufrades 2, der Abstand B zwischen der Achse des Laufrades 2 und der Schwenkachse 5, der Abstand C zwischen der Schwenkachse 5 und der Achse des zweiten Umlenkrades 4, der Schwenkwinkel $\alpha$ und der Durchmesser R des ersten Umlenkrades 1, des Laufrades 2 und des zweiten Umlenkrades 4, welche gemäß der zweiten bevorzugten Ausführungsform gleich groß sind, verwendet.

Die Länge des zweiten Teilstückes 12, des vierten Teilstückes 14 und des sechsten Teilstückes 16 ergeben, unabhängig vom Schwenkwinkel $\alpha$, addiert genau den Umfang eines Kreises mit dem Durchmesser R.

Die Länge des ersten Teilstückes 11 entspricht A. Die Länge des dritten Teilstückes 13 kann mittels dem Kosinussatz aus B, C und $\alpha$ gebildet werden. Die Länge des fünften Teilstückes 15 kann mittels Kosinussatz aus C, $\alpha$ und der Differenz von A und B gebildet werden.

Zusammenaddiert ergibt die Länge d für die erste bevorzugte Ausführungsform dann

7

$$d = \pi R + A + \sqrt{B^2 + C^2 - 2BC\cos\alpha} + \sqrt{C^2 + (A-B)^2 + 2C(A-B)\cos\alpha}\,.$$

Anhand dieser Formel kann die Position der Schwenkachse 5, welche hier durch den Abstand zwischen Schwenkachse 5 und Achse des Laufrades 2 definiert ist, bestimmt werden, bei welcher der Arbeits-Schwenkbereich den Sollbereich erfüllt, oder diesem zumindest angenährt ist. Wenn der Raupendilatationstoleranzbereich, der Abstand A, der Abstand C und der Sollbereich vorgegeben ist, wird bei einer nummerische Optimierungsmethode die Länge d als eine Kurve von $\alpha$ aufgetragen und B so lange variiert, bis der Arbeits-Schwenkbereich den Sollbereich erfüllt, oder diesem zumindest angenährt ist.

Bei einem ersten Beispiel ist A = 450 mm, C = 400 mm und R = 110 mm, da diese Größen beispielsweise durch den Verwendungszweck des Fahrzeuges vorgegeben sind. Beim ersten Beispiel ist eine einteilige Raupenkette aus Verbundwerkstoff vorgesehen, von welcher bekannt ist, dass eine Längenänderung um 0,19% akzeptabel ist, weshalb der Raupendilatationstoleranzbereich der Bereich zwischen 100% und 99,9% der maximal vorgesehenen Länge d im Betrieb ist. Als Sollbereich ist beim ersten Beispiel ein Schwenkbereich von 40° in beide Richtungen ausgehend von der Ebenenposition vorgegeben, beispielsweise da das Fahrzeug in der Lage sein soll Treppen zu erklimmen.

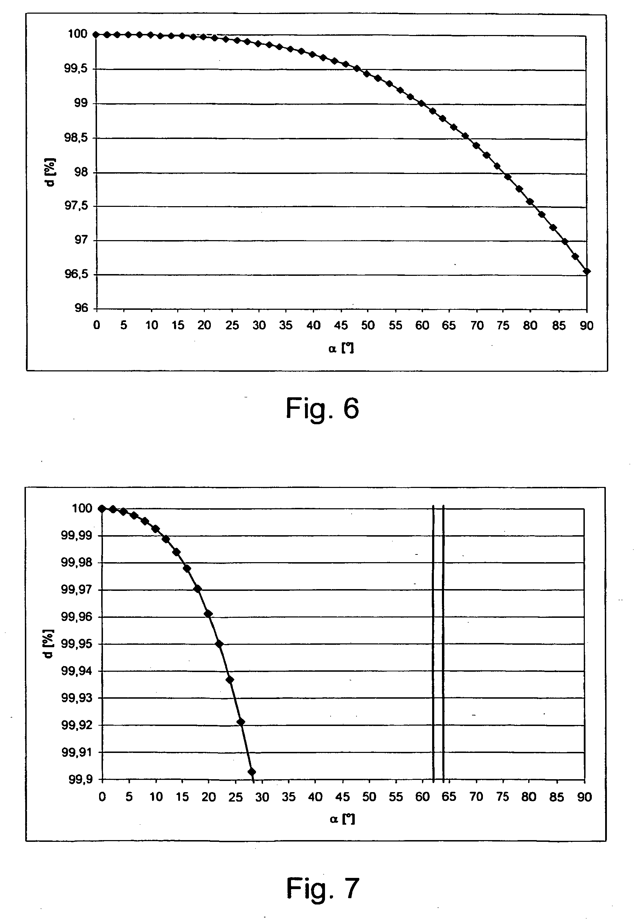

Fig. 6 zeigt die Länge d als Funktion des Schwenkwinkels $\alpha$ bei B = 120 mm, wobei die Länge d hier an der Ordinate in Prozent der maximalen Länge d angegeben wird. Hierbei nimmt die Länge d mit zunehmen Schwenkwinkel $\alpha$ stetig ab. Da im gegebenen Beispiel der Raupendilatationstoleranzbereich der Bereich zwischen 100% und 99,9% ist, wird in Fig. 7 der Verlauf der Kurve im Raupendilatationstoleranzbereich dargestellt. Es ist ersichtlich, dass die Länge d bis zu einem Schwenkwinkel $\alpha$ 28° im Raupendilatationstoleranzbereich verbleibt. Da das zweite bevorzugte Ausführungsbeispiel symmetrisch um die Ebenenposition ist bedeutet das, dass der Arbeitsschwenkbereich bei B = 120 mm ein Schwenkbereich von 28° in beide Richtungen ausgehend von der Ebenenposition ist.

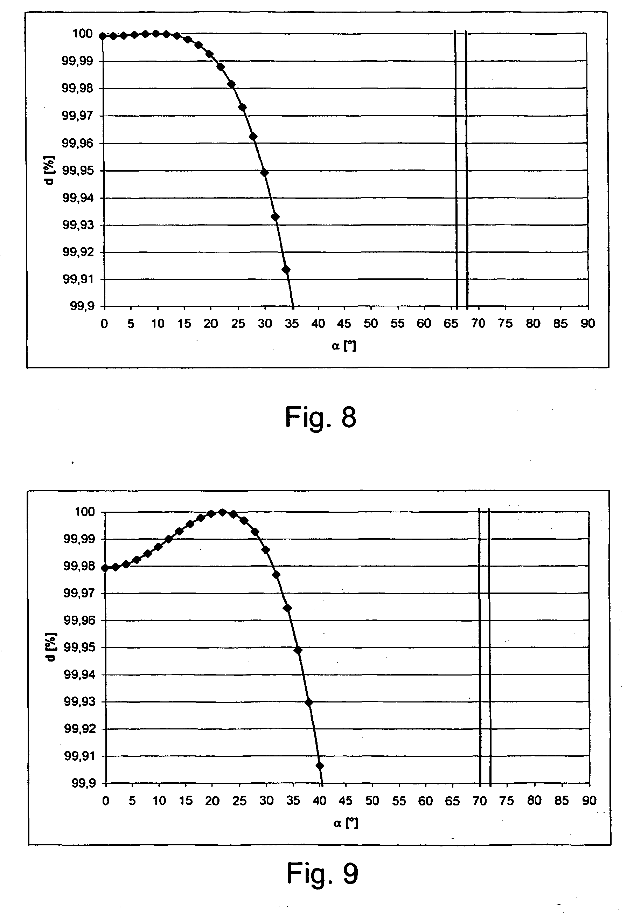

Wenn B auf 125 mm vergrößert wird, wächst ebenfalls in diesem ersten Beispiel der Arbeits-Schwenkbereich auf 35°, wie in Fig. 8 ersichtlich ist. Bei einer weiteren Änderung auf 129 mm, wie in Fig. 9 dargestellt, wächst der Arbeits-Schwenkbereich auf 40° in beide Richtungen ausgehend von der Ebenenposition, wodurch der Arbeits-Schwenkbereich den Sollbereich erfüllt. Hierbei kommt es bei einer Verschwenkung des Schwenkelementes 6 aus der Ebenenposition zunächst zu einer Zunahme der Länge d bis zu dem Schwenkwinkel $\alpha$ von 22°.

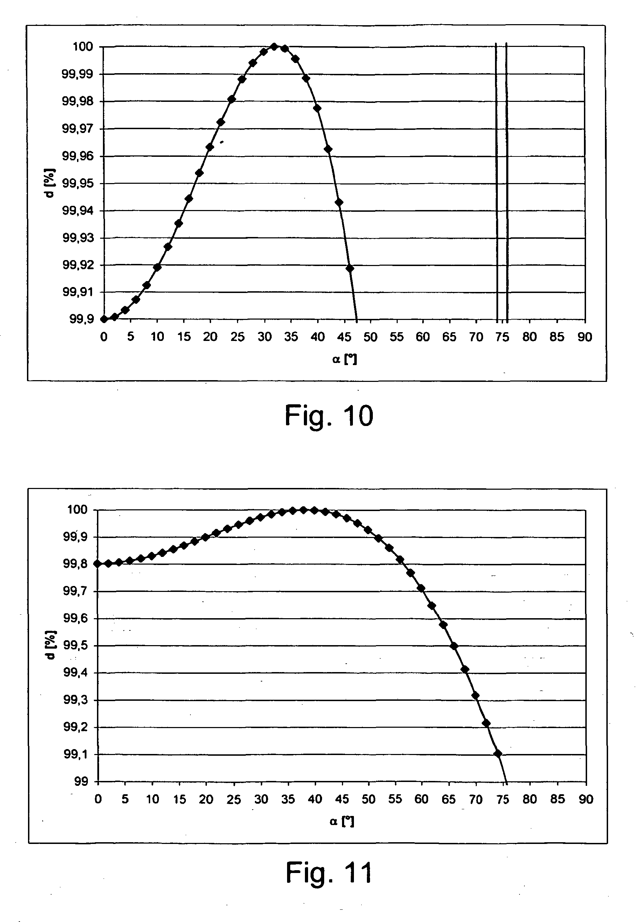

Fig. 10 zeigt im ersten Beispiel den maximalen Arbeits-Schwenkbereich von ca. 47° in beide Richtungen ausgehend von der Ebenenposition bei B = 135,23 mm. Hierbei ist die Länge d in der Ebenenposition am unteren Rand des Raupendilatationstoleranzbereiches. Bei einem Schwenkwinkel von ca. 32° hat die Länge d den maximalen Wert von 2122 mm.

Eine weitere Vergrößerung von B, beispielsweise auf 140 mm wie in Fig. 11 dargestellt, führt dazu, dass die Länge d in der Ebenenposition unterhalb des Raupendilatationstoleranzbereiches, konkret bei ca. 99,8% der maximalen Länge, ist.

Im ersten Beispiel erfüllt daher der Abstand B zwischen der Schwenkachse 5 und der Achse des Laufrades 2 in einem Bereich zwischen 129 mm und 135,23 mm bei den vorgegebenen Werten sowohl den Bedingungen des Raupendilatationstoleranzbereiches als auch des Sollbereiches.

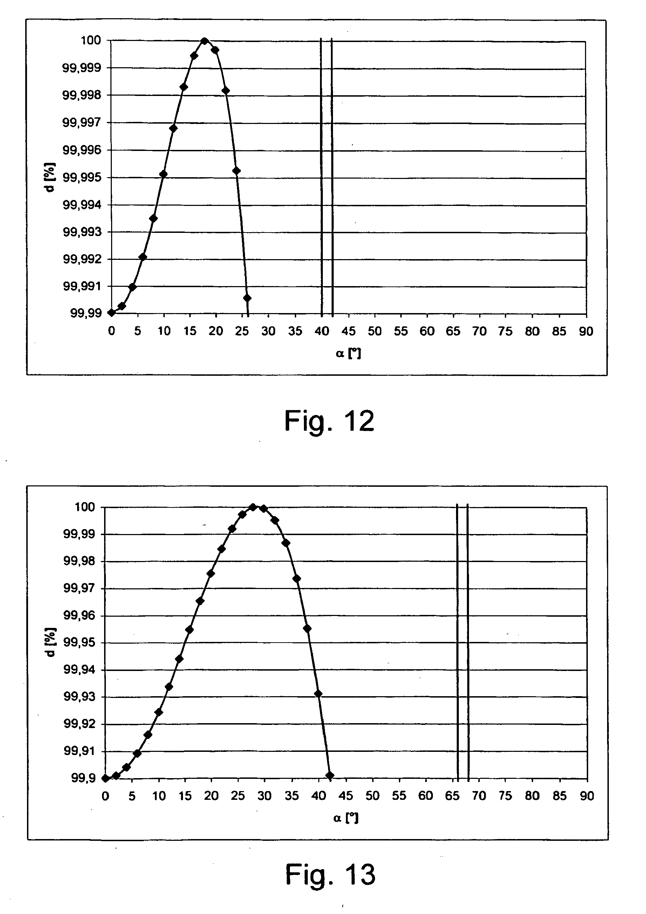

In einem zweiten Beispiel entsprechen alle Werte den Werten des ersten Beispiels, wobei der vorgegebene Raupendilatationstoleranzbereich nur 0,01%, daher ein Zehntel des Wertes des ersten Beispieles beträgt. Hierbei erfüllt kein Abstand B zwischen der Schwenkachse 5 und der Achse des Laufrades 2 die gestellten Anforderungen. Mit der obengenannten Methode kann allerdings ein Wert für den Abstand B ermittelt werden, bei welchen der Arbeits-Schwenkbereich dem Sollbereich angenähert ist, daher der Unterschied zwischen Arbeits-Schwenkbereich und Sollbereich minimal ist. Dieser Wert für den Abstand B zwischen der Schwenkachse 5 und der Achse des Laufrades 2 beträgt in diesem zweiten Beispiel 127,45 mm, wobei der Arbeits-Schwenkbereich gemäß Fig. 12 26° in beide Richtungen ausgehend von der Ebenenposition beträgt.

Bei einem dritten Beispiel ist A = 600 mm, C = 300 mm, R = 55 mm, der Sollbereich 40° in beide Richtungen ausgehend von der Ebenenposition und der Raupendilatationstoleranzbereich der Bereich zwischen 100% und 99,9% der maximalen Länge d. Auch hier kann durch die gleiche Vorgehensweise der Bereich des Abstand B zwischen der Schwenkachse 5 und der Achse des Laufrades 2 gefunden werden, bei welchen die Bedingungen erfüllt sind, wobei dieser Bereich sich von 123,5 mm bis zu 125,7 mm erstreckt. Gemäß Fig. 13 ist der maximale Arbeits-Schwenkbereich 42° in beide Richtungen ausgehend von der Ebenenposition wenn der Abstand B zwischen der Schwenkachse 5 und der Achse des Laufrades 2 125,7 mm ist.

Hiermit ist ausführlich dargelegt, dass mit einer sehr einfachen Optimierungsmethode erreicht werden kann, dass der Arbeits-Schwenkbereich des Schwenkelementes 6 den vorgebbaren Sollbereich entweder erfüllt oder diesem zumindest angenähert ist, wobei die Länge der umschließenden Kurve 7 bei der Verschwenkung des Schwenkelementes 6 innerhalb des Arbeits-Schwenkbereiches in dem vorgegebenen Raupendilatationstoleranzbereich ist.

Auch bei der ersten bevorzugten Ausführungsform, bei welcher die einzelnen Durchmesser unterschiedlich sind und die Schwenkachse 5 nicht auf der Verbindungsstrecke 8 angeordnet ist, kann der Fachmann durch Unterteilen der umschließenden Kurve 7 in mehrere Teilstücke mit trigonometrischen Grundkenntnissen die Länge d der umschließenden Kurve 7 berechnen, und die obengenannte Optimierungsmethode analog durchführen.

Weiters ist davon auszugehen, dass dem Fachmann Optimierungsmethoden bekannt sind, bei welchen mehr als ein Wert optimiert wird, beispielsweise wenn neben dem Abstand B zwischen der Schwenkachse 5 und der Achse des Laufrades 2 auch der Abstand C zwischen der Schwenkachse 5 und der Achse des zweiten Umlenkrades 2 nicht vorgegeben ist.

Bei der Raupenfahrwerkaufhängung kann weiters vorgesehen sein, dass zwischen dem ersten Umlenkrad 1 und dem wenigstens einem Laufrad 2 weitere Laufräder angeordnet sind.

Bei mehreren Laufrädern kann bevorzugt vorgesehen, dass das erste Umlenkrad 1 derart angeordnet ist, dass die Raupenfahrwerkaufhängung bei einem ebenen Untergrund lediglich mit den Laufrädern auf der Raupenkette aufliegt. Dadurch kann eine starke Verschmutzung im Bereich des ersten Umlenkrades 1 verhindert werden.

Weiters kann vorgesehen sein, dass eine Handbetätigungseinrichtung zum Verschwenken und/oder Arretieren des Schwenkelementes 6 vorgesehen ist. Hierbei kann der Schwenkwinkel $\alpha$ vor dem Einsatz an die Umgebung angepasst werden. Eine solche Handbetätigungseinrichtung kann beispielsweise im einfachsten Fall eine an der Aufhängungsvorrichtung 3 angeordnete Lochplatte sein, wobei das Schwenkelement 6 ebenfalls eine Bohrung aufweist, und dass Schwenkelement 6 mittels einem Bolzen an der Lochplatte im gewünschten Winkel fixiert wird. Die Handbetätigungseinrichtung kann aber beispielsweise auch ein durch eine Kurbel verstellbares Getriebe sein, welches an der Schwenkachse angeordnet ist. Dadurch kann der Aufbau der Raupenfahrwerkaufhängung besonders einfach gehalten werden.

Besonders bevorzugt kann vorgesehen sein, dass ein Motor zum Verschwenken und/oder Arretieren des Schwenkelementes 6 vorgesehen ist. Dadurch kann das Schwenkelement 6 während der Fahrt verschwenkt werden, wodurch eine besonders gute Geländegängigkeit erreicht werden kann.

Besonders bevorzugt kann vorgesehen sein, dass der Motor ein Linear-Aktuator, insbesondere ein Spindeltrieb, ist, welcher direkt am Schwenkelement 6, oder einem Fortsatz des Schwenkelementes 6, und zumindest mittelbar an der Aufhängungsvorrichtung 3 befestigt ist. Dadurch kann ein besonders starker, robuster, aber einfach aufgebauter Motor verwendet werden.

Bevorzugt kann vorgesehen sein, dass am Motor ein Feder/Dämpfungssystem angeordnet ist. Ein solches Feder/Dämpfungssystem kann beispielsweise zwischen Motor und Schwenkelement 6, oder Motor und Aufhängungsvorrichtung 3 angeordnet sein. Dadurch kann der Verschleiß der Raupenfahrwerkaufhängung, insbesondere des Motors, gering gehalten werden.

Weiters kann bevorzugt vorgesehen sein, dass eine Arretiervorrichtung 9 zum Arretieren der Lage des Schwenkelementes 6 gegenüber der Aufhängungsvorrichtung 3 vorgesehen ist. Eine solche Arretiervorrichtung 9 kann beispielsweise in der Handbetätigungseinrichtung oder dem Motor zum Verschwenken des Schwenkelementes 6 integriert sein. Eine solche Arretiervorrichtung 9 kann beispielsweise nach dem Prinzip der Reibung, beispielsweise Scheibenoder Trommelbremse, oder des Formschlusses funktionieren. Dadurch kann erreicht werden, dass der Verschleiß der Handbetätigungseinrichtung oder des Motors gering gehalten werden kann.

Alternativ kann aber auch vorgesehen sein, dass lediglich die Arretiervorrichtung 9 zum Arretieren der Lage des Schwenkelementes 6 gegenüber der Aufhängungsvorrichtung 3 vorgesehen ist, und bei Freigabe durch die Arretiervorrichtung 9 das Schwenkelement 6 mittelbar durch die Raupenkette verschwenkt wird. Dadurch kann der Aufbau der Raupenfahrwerkaufhängung besonders einfach gehalten werden.

Besonders bevorzugt kann vorgesehen sein, dass die Arretiervorrichtung 9 ein Stoßdämpferelement umfasst. Dadurch kann der Verschleiß der Raupenfahrwerkaufhängung, bzw. der Raupenkette gering gehalten werden.

Bevorzugt kann weiters vorgesehen sein, dass das zweite Umlenkrad 4 mittels einer Blockiereinrichtung 10 blockierbar ist. Eine solche Blockiereinrichtung 10 kann beispielsweise eine Bremsvorrichtung sein, oder nach dem Prinzip des Formschlusses funktionieren. Dadurch kann das Schwenkelement 6 mittelbar durch die Raupenkette verschwenkt werden, wie nachfolgend im Verfahren zum Verschwenken eines Schwenkelementes 6 näher erläutert wird.

Weiters kann bevorzugt vorgesehn sein, dass eine Schwenkbegrenzungsanordnung einen vorgebbaren Betriebs-Schwenkbereich begrenzt, wobei der Betriebs-Schwenkbereich innerhalb des Arbeits-Schwenkbereiches ist. Der Betriebs-Schwenkbereich ist dabei jener Teil des Arbeits-Schwenkbereiches, welcher durch die Schwenkbegrenzungsanordnung zusätzlich begrenzt ist. Der Betriebs-Schwenkbereich kann dabei den ganzen Arbeits-Schwenkbereich oder nur Teile des Arbeits-Schwenkbereiches umfassen.

Eine solche Schwenkbegrenzungsanordnung kann beispielsweise ein Schalter sein, welcher mit dem Motor zum Verschwenken und/oder Arretieren des Schwenkelementes 6 schaltungstechnisch verbunden ist. Wenn dabei der Schwenkwinkel $\alpha$ des Schwenkelementes 6 einem Grenzwert des Betriebs-Schwenkbereiches entspricht wird dieser Schalter betätigt, und ein weiteres Verschwenken des Schwenkelementes 6 durch den Motor gestoppt.

Alternativ kann vorgesehen sein, dass die Schwenkbegrenzungsanordnung einen Schwenkbegrenzungsbolzen umfasst, wobei der Schwenkbegrenzungsbolzen insbesondere als Anschlag für das Schwenkelement 6 ausgebildet ist. Dadurch kann ein Verlassen des Betriebs-Schwenkbereiches, und damit verbunden des Arbeitsschwenkbereiches, beispielsweise durch eine Fehlbedienung oder gewaltsam durch ein Anfahren an ein Hindernis, unterbunden werden, wodurch die Gefahr eines Abwurfes der Raupenkette im Einsatz verringert wird.

Bevorzugt kann weiters vorgesehn sein, dass der Schwenkbegrenzungsbolzen lösbar angeordnet ist. Dadurch kann das Schwenkelement 6 beispielsweise für Wartungszwecke aus dem Arbeits-Schwenkbereich geschwenkt werden.

Die Erfindung beinhaltet weiters ein Fahrzeug mit wenigstens einer erfindungsgemäßen Raupenfahrwerkaufhängung.

Solch ein Fahrzeug kann beispielsweise ein Halbkettenfahrzeug sein, wobei das Fahrzeug lediglich eine Raupenfahrwerkaufhängung für eine vorgesehene Raupenkette aufweist, welche beispielsweise für die Traktion zuständig ist.

Besonders bevorzugt kann vorgesehen sein, dass dieses Fahrzeug zwei Raupenfahrwerkaufhängungen aufweist, insbesondere eins an jeder Seite.

Weiters kann vorgesehen sein, dass dieses Fahrzeug vier Raupenfahrwerkaufhängungen, insbesondere zwei an jeder Seite, aufweist. An jeder Seite sind hierbei die Raupenfahrwerkaufhängungen derart angeordnet, dass das die beiden ersten Umlenkräder 1 innen, und die beiden zweiten Umlenkräder 4 außen sind. Dadurch weist so ein Fahrzeug sowohl in der Vorwärtsfahrt als auch in der Rückwärtsfahrt eine besonders gute Geländegängigkeit auf.

Besonders bevorzugt kann vorgesehen sein, dass das Fahrzeug im Betrieb unbemannt ist, daher, dass das Fahrzeug als ein UGV (Unmanned Ground Vehicle) ausgebildet ist.

Die Raupenfahrwerkaufhängung ermöglicht ein Verfahren zum Wechseln der Raupenkette, wobei das Schwenkelement 6 um einen den Arbeits-Schwenkbereich überschreitenden Winkel verschwenkt wird, wobei die Länge der das erstes Umlenkrad 1, das zweites Umlenkrad 4 und das wenigstens eine Laufrad 2 umschließenden Kurve 7 zumindest so weit verringert wird, dass die Raupenkette abgenommen werden kann, dass anschließend die Raupenkette gewechselt wird und dass abschließend das Schwenkelement 6 in den Arbeits-Schwenkbereich verschwenkt wird.

Dadurch ergibt sich der Vorteil, dass die Raupenkette schnell gewechselt werden kann, insbesondere da ein eigener Schritt zum Spannen der Kette entfällt, und das betroffene Fahrzeug schnell wieder einsatzfähig ist. Weiters kann dadurch einfach und schnell die für den Einsatzzweck geeignetste Raupenkette an der Raupenfahrwerkaufhängung angeordnet werden. Weiters sind dadurch nur wenige Manipulationen an der Raupenfahrwerkaufhängung notwendig um die Kette zu wechseln, wodurch die Gefahr einer Kontamination des Bedienungspersonals durch vom Einsatz kontaminierte Raupenketten gering gehalten werden kann.

Besonders vorteilhaft hat es sich bei diesem Verfahren erwiesen, dass die Raupenfahrwerkaufhängung einen Schwenkbegrenzungsbolzen aufweist, welcher lösbar angeordnet ist. Hierbei wird vor dem Verschwenken des Schwenkelementes 6 aus dem Arbeits-Schwenkbereich der Schwenkbegrenzungsbolzen abgenommen, anschließend wird, wie oben beschrieben, die Raupenkette gewechselt, und, nachdem das Schwenkelement 6 wieder in den Arbeits-Schwenkbereich verschwenkt wurde, der Schwenkbegrenzungsbolzen wieder angebracht. Dadurch kann auf besonders einfache und zuverlässige Weise zwischen einem Betriebszustand, in welchen das Schwenkelement 6 sich Arbeits-Schwenkbereich befindet, und dem Zustand bei Kettenwechsel gewechselt werden.

Weiters kann besonders bevorzugt ein Verfahren zum Verschwenken des Schwenkelementes 6 um die Schwenkachse 5 bei der Raupenfahrwerkaufhängung mit der Blockiereinrichtung 10 und der Raupenkette vorgesehen sein, wobei, bei freigegeben Schwenkelement 6 und bei einem blockierten zweiten Umlenkrad 4, durch eine Bewegung der Raupenkette das Schwenkelement 6 verschwenkt wird, und wobei nachfolgen das Schwenkelement 6 blockiert wird und das zweite Umlenkrad 4 freigegeben wird.

Dadurch ergibt sich der Vorteil, dass das Verschwenken des Schwenkelementes ohne einen eigenen Motor zum Verschwenken des Schwenkelementes möglich ist. Dadurch kann eine besonders einfach aufgebaute Raupenfahrwerkaufhängung verwendet werden.

**Patentansprüche**

1. Raupenfahrwerksaufhängung, mit einem ersten Umlenkrad (1) und wenigstens einem Laufrad (2), wobei eine Achse des ersten Umlenkrades (1) und eine Achse des wenigstens einen Laufrades (2) in einer Aufhängungsvorrichtung (3) gelagert sind, und einem zweiten Umlenkrad (4), wobei eine Achse des zweiten Umlenkrades (4) in einem gegenüber der Aufhängungsvorrichtung (3) um eine Schwenkachse (5) verschwenkbar angeordneten Schwenkelement (6) gelagert ist, wobei die Achse des ersten Umlenkrades (1), die Achse des zweiten Umlenkrades (4) und die Achse des wenigstens einen Laufrades (2) in einer Ebenenposition im Wesentlichen in einer Ebene angeordnet sind, wobei in der Ebenenposition das wenigstens eine Laufrad (2) zwischen dem ersten Umlenkrad (1) und dem zweiten Umlenkrad (4) angeordnet ist, wobei der Abstand zwischen der Achse des ersten Umlenkrades (1) und der Achse des wenigstens einen Laufrades (2) sowohl größer ist als der Abstand zwischen der Schwenkachse (5) und der Achse des ersten Umlenkrades (1), als auch der Abstand zwischen der Schwenkachse (5) und der Achse des wenigstens einen Laufrades (2), wobei die Länge der das erste Umlenkrad (1), das zweite Umlenkrad (4) und das wenigstens eine Laufrad (2) umschließenden Kurve (7) bei einer Verschwenkung des Schwenkelementes (6) innerhalb eines Arbeits-Schwenkbereiches in einem vorgegebenen Raupendilatationstoleranzbereich ist, **dadurch gekennzeichnet, dass** die Schwenkachse (5) im Bereich zwischen der Achse des wenigstens einen Laufrades (2) und der Mitte einer Verbindungsstrecke (8) zwischen der Achse des wenigstens einen Laufrades (2) und der Achse des ersten Umlenkrades (1) angeordnet ist.

2. Raupenfahrwerksaufhängung nach Anspruch 1, **dadurch gekennzeichnet, dass** der vorgebbare Raupendilatationstoleranzbereich unter Berücksichtigung der Eigenschaften einer vorgesehenen Raupenkette, und/oder den Eigenschaften des ersten Umlenkrades (1), und/oder den Eigenschaften des wenigstens einen Laufrades (2) und/ oder den Eigenschaften des zweiten Umlenkrades (4) vorgegeben ist.

3. Raupenfahrwerksaufhängung nach Anspruch 1 oder 2, **dadurch gekennzeichnet, dass** der vorgebbare Sollbereich ein Schwenkbereich von 20°, bevorzugt 30°, insbesondere 40°, in beide Richtungen ausgehend von der Ebenenposition ist.

4. Raupenfahrwerksaufhängung nach einem der Ansprüche 1 bis 3, **dadurch gekennzeichnet, dass**, vorzugsweise lediglich, das erste Umlenkrad (1) angetrieben ist.

5. Raupenfahrwerksaufhängung nach einem der Ansprüche 1 bis 4, **dadurch gekennzeichnet, dass** die Schwenkachse (5) auf der Verbindungsstrecke (8) zwischen der Achse des wenigstens einen Laufrades (2) und der Achse des ersten Umlenkrades (1) angeordnet ist.

6. Raupenfahrwerksaufhängung nach einem der Ansprüche 1 bis 5, **dadurch gekennzeichnet, dass** die Durchmesser des ersten Umlenkrades (1), des zweiten Umlenkrades (4) und des wenigstens einen Laufrades (2) im Wesentlichen gleich sind.

7. Raupenfahrwerksaufhängung nach einem der Ansprüche 1 bis 6, **dadurch gekennzeichnet, dass** eine Schwenkbegrenzungsanordnung einen vorgebbaren Betriebs-Schwenkbereich begrenzt, wobei der Betriebs-Schwenkbereich innerhalb des Arbeits-Schwenkbereiches ist.

8. Raupenfahrwerksaufhängung nach einem der Ansprüche 1 bis 7, **dadurch gekennzeichnet, dass** eine Handbetätigungseinrichtung zum Verschwenken und/oder Arretieren des Schwenkelementes (6) vorgesehen ist.

9. Raupenfahrwerksaufhängung nach einem der Ansprüche 1 bis 7, **dadurch gekennzeichnet, dass** ein Motor zum Verschwenken und/oder Arretieren des Schwenkelementes (6) vorgesehen ist.

10. Raupenfahrwerksaufhängung nach einem der Ansprüche 1 bis 9, **dadurch gekennzeichnet, dass** eine Arretiervorrichtung (9) zum Arretieren der Lage des Schwenkelementes (6) gegenüber der Aufhängungsvorrichtung (3) vorgesehen ist.

11. Raupenfahrwerksaufhängung nach Anspruch 10, **dadurch gekennzeichnet, dass** die Arretiervorrichtung (9) ein Stoßdämpferelement umfasst.

12. Raupenfahrwerksaufhängung nach einem der Ansprüche 1 bis 11, **dadurch gekennzeichnet, dass** die Raupenfahrwerksaufhängung eine Bremsvorrichtung umfasst, zum Blockieren des zweiten Umlenkrades (4).

13. Fahrzeug mit wenigstens einer Raupenfahrwerksaufhängung nach einem der Ansprüche 1 bis 12.

14. Verfahren zum Wechseln einer Raupenkette bei einer Raupenfahrwerksaufhängung nach einem der Ansprüche 1 bis 12, **dadurch gekennzeichnet, dass** ein Schwenkelement (6) um einen den Arbeits-Schwenkbereich überschreitenden Winkel verschwenkt wird, wobei die Länge der ein erstes Umlenkrad (1), ein zweites Umlenkrad (4) und wenigstens ein Laufrad (2) umschließenden Kurve (7) zumindest so weit verringert wird, dass die Raupenkette abgenommen werden kann, dass anschließend die Raupenkette gewechselt wird und dass abschließend das Schwenkelement (6) in den Arbeits-Schwenkbereich verschwenkt wird.

15. Verfahren zum Verschwenken eines Schwenkelementes (6) um eine Schwenkachse (5) bei einer Raupenfahrwerksaufhängung nach Anspruch 12 mit einer Raupenkette, **dadurch gekennzeichnet, dass**, bei freigegebenem Schwenkelement (6) und bei einem blockierten zweiten Umlenkrad (4), durch eine Bewegung der Raupenkette das Schwenkelement (6) verschwenkt wird, und dass nachfolgend das Schwenkelement (6) blockiert wird und das zweite Umlenkrad (4) freigegeben wird.

**Claims**

1. Track assembly mounting with a first deflection wheel (1) and at least one bogie wheel (2) wherein an axle of the first deflection wheel (1) and an axle of the at least one bogie wheel (2) are mounted in a suspension means (3), and with a second deflection wheel (4) wherein an axle of said second wheel 4) is mounted in a pivot element (6) arranged pivotably opposite the suspension means (3) around a pivot axle (5) wherein the axle of the first deflection wheel (1), the axle of the second deflection wheel (4) and the axle of the at least one bogie wheel (2) are arranged in a level position essentially in one plane, whereby in the level position the at least one bogie wheel (2) is located between the first deflection wheel (1) and the second deflection wheel (4) and the distance between the axle of the first deflection wheel (1) and the axle of the at least one bogie wheel (2) is greater than both the distance between the pivot axle (5) and the axle of the first deflection wheel (1) and the distance between the pivot axle (5) and the axle of the at least one bogie wheel (2), whereby the length of the curve (7) encircling the first deflection wheel (1), the second deflection wheel (4) and the at least one bogie wheel (2) during tilting of the pivot element (6) within a working pivoting range is within a specified tracked vehicle expansion tolerance range, **characterized in that** the pivot axle (5) is situated in the area between the axle of the at least one bogie wheel (2) and the centre of a connecting section (8) between the axle of the at least one bogie wheel (2) and the axle of the first deflection wheel (1).

2. Track assembly mounting according to claim 1 **characterized in that** the presettable tracked vehicle expansion tolerance range is specified according to the characteristics of a designated track and/or the characteristics of the first deflection wheel (1) and/or the characteristics of the at least one bogie wheel (2) and/or the characteristics of the second deflection wheel (4).

3. Track assembly mounting according to claim 1 or 2, **characterized in that** the specifiable setting range is a pivoting range of 20°, preferably 30°, particularly 40°, in both directions starting from the level position.

4. Track assembly mounting according to any one of claims 1 to 3, **characterized in that** preferably only the first deflection wheel (1) is a driven wheel.

5. Track assembly mounting according to any one of claims 1 to 4, **characterized in that** the pivot axle (5) is mounted on the connecting section (8) between the axle of the at least one bogie wheel (2) and the axle of the first deflection wheel (1).

6. Track assembly mounting according to any one of claims 1 to 5, **characterized in that** the diameters of the first deflection wheel (1), the second deflection wheel (4) and the at least one bogie wheel (2) are essentially the same.

7. Track assembly mounting according to any one of claims 1 to 6, **characterized in that** a pivot limitation means limits a specifiable operational pivoting range, said operational pivoting range being within the working pivoting range.

8. Track assembly mounting according to any one of claims 1 to 7, **characterized in that** a manual control means is provided to pivot and/or lock the pivot element (6).

9. Track assembly mounting according to any one of claims 1 to 7, **characterized in that** a motor is provided to pivot and/or lock the pivot element (6.

10. Track assembly mounting according to any one of claims 1 to 9, **characterized in that** a locking device (9) is provided to lock the pivot element (6) in position opposite the suspension means (3).

11. Track assembly mounting according to claim 10, **characterized in that** the locking means (9) comprises a shock absorber element.

12. Track assembly mounting according to any one of claims 1 to 11, **characterized in that** said chassis suspension comprises a braking means to block the second deflection wheel (4).

13. Vehicle with at least one track assembly mounting according to any one of claims 1 to 12.

14. Method for replacing a tracked vehicle chain on a track assembly mounting according to any one of claims 1 to 12, **characterized in that** a pivot element (6) is pivoted around an angle exceeding the working pivoting range wherein the length of the curve (7) encircling a first deflection wheel (1), a second deflection wheel (4) and at least one bogie wheel (2) is reduced at least sufficiently so that the tracked vehicle chain can be removed, said vehicle chain is then replaced and finally the pivot element (6) is pivoted into the working pivoting range.

15. Method for pivoting a pivot element (6) around a pivot axle (5) in a track assembly mounting according to claim 12 with a tracked vehicle chain, **characterized in that** when the pivot element (6) is released and a second deflection wheel (4) is blocked, the pivot element (6) is pivoted by a movement of the tracked vehicle chain, and said pivot element (6) is then blocked and the second deflection wheel (4) is released.

**Revendications**

1. La suspension de chenille avec une première roue de renvoi (1) et au moins une roue de roulement (2), en l'occurrence de quoi un axe de la première roue de renvoi (1) et un axe d'au moins une roue de roulement (2) sont logés dans un mécanisme de suspension (3), et une seconde roue de renvoi (4), en l'occurrence de quoi un axe de la seconde roue de renvoi (4) est logé dans un élément pivotant (6) autour d'un axe pivotant (5) vis-à-vis du mécanisme de suspension (3), en l'occurrence de quoi l'axe de la première roue de renvoi (1), l'axe de la seconde roue de renvoi (4) et l'axe d'au moins une roue de roulement (2) sont disposés essentiellement dans une position plane, en l'occurrence de quoi au moins une roue de roulement (2) est disposée entre la première roue de renvoi (1) et la seconde roue de renvoi (4) dans ladite position plane, en l'occurrence de quoi la distance entre l'axe de la première roue de renvoi (1) et l'axe d'au moins une roue de roulement (2) est supérieure à la distance entre l'axe pivotant (5) et l'axe de la première roue de renvoi (1), comme la distance entre l'axe pivotant (5) et l'axe d'au moins une roue de roulement (2), en l'occurrence de quoi la longueur de la courbe (7) entourant la première roue de renvoi (1), la seconde roue de renvoi (4) et au moins une roue de roulement (2) se trouve, lors du pivotement d'un élément pivotant (6), dans une zone de pivotement de travail, dans une zone de tolérance de dilatation des chenilles définie, caractérisée en cela que l'axe pivotant (5) est disposé dans la zone entre l'axe d'au moins une roue de roulement (2) et le centre d'une voie de jonction (8) entre l'axe d'au moins une roue de roulement (2) et l'axe de la première roue de renvoi (1).

2. La suspension de chenille suivant l'exigence 1, caractérisée en cela que la zone de tolérance de dilatation des chenilles définissable est définie en tenant compte des propriétés d'une chaîne à chenilles prévue et/ou des propriétés de la première roue de renvoi (1) et/ou des propriétés d'au moins une roue de roulement (2) et/ou des propriétés de la seconde roue de renvoi (4).

3. La suspension de chenille suivant l'exigence 1 ou 2, caractérisée en cela que la zone de consigne définissable est une zone de pivotement de 20°, de préférence de 30°, en particulier de 40°, partant dans les deux sens de la position plane.

4. La suspension de chenille suivant l'une des exigences 1 à 3, caractérisée en cela que de préférence seule la première roue de renvoi (1) est entraînée.

5. La suspension de chenille suivant l'une des exigences 1 à 4, caractérisée en cela que l'axe pivotant (5) est disposé sur la voie de jonction (8) entre l'axe d'au moins une roue de roulement (2) et l'axe de la première roue de renvoi (1).

6. La suspension de chenille suivant l'une des exigences 1 à 5, caractérisée en cela que le diamètre de la première roue de renvoi (1), de la seconde roue de renvoi (4) et d'au moins une roue de roulement (2) sont sensiblement identiques.

7. La suspension de chenille suivant l'une des exigences 1 à 6, caractérisée en cela que la disposition d'une limite de pivotement limite une zone de pivotement de travail définissable, en l'occurrence de quoi la zone de pivotement de fonctionnement se trouve dans les limites de la zone de pivotement de travail.

8. La suspension de chenille suivant l'une des exigences 1 à 7, caractérisée en cela qu'un mécanisme d'actionnement manuel est prévu pour le pivotement et/ou l'arrêt de l'élément pivotant (6).

9. La suspension de chenille suivant l'une des exigences 1 à 7, caractérisée en cela qu'un moteur est prévu pour le pivotement et/ou l'arrêt de l'élément pivotant (6).

10. La suspension de chenille suivant l'une des exigences 1 à 9, caractérisée en cela qu'un dispositif d'arrêt (9) est prévu pour le blocage de la position de l'élément pivotant (6) vis-à-vis du mécanisme de suspension (3).

11. La suspension de chenille suivant l'exigence 10, caractérisée en cela que le dispositif d'arrêt (9) comprend un élément amortisseur.

12. La suspension de chenille suivant l'une des exigences 1 à 11, caractérisée en cela que la suspension de chenille comprend un dispositif de freinage pour le blocage de la seconde roue de renvoi (4).

13. Véhicule avec au minimum une suspension de chenilles suivant l'une des exigences 1 à 12.

14. Procédure de changement d'une chaîne à chenilles avec une suspension de chenilles suivant l'une des exigences 1 à 12, caractérisée en cela qu'un élément pivotant (6) est pivoté dans un angle dépassant la zone de pivotement de travail, en l'occurrence de quoi la longueur de la courbe (7) entourant une première roue de renvoi (1), une seconde roue de renvoi (4) et au moins une roue de roulement (2) est au minimum réduite pour que la chaîne à chenilles puisse être retirée, ensuite changée et que finalement l'élément pivotant (6) soit pivoté dans la zone de pivotement de travail.

15. Procédure de pivotement d'un élément pivotant (6) autour d'un axe pivotant (5) sur une suspension de châssis à chenilles suivant l'exigence 12 avec une chaîne à chenilles, caractérisée en cela que l'élément pivotant (6) est pivoté avec l'élément pivotant débloqué (6) et une seconde roue de renvoi bloquée (4), par un mouvement de la chaîne à chenilles et qu'ensuite l'élément pivotant (6) est bloqué et la seconde roue de renvoi (4) débloquée.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

**IN DER BESCHREIBUNG AUFGEFÜHRTE DOKUMENTE**

**In der Beschreibung aufgeführte Patentdokumente**

- US 20070029117 A1